# EUROPÄISCHE PATENTSCHRIFT

(11) **EP 1 462 243 B1**
(45) Veröffentlichungstag und Bekanntmachung des Hinweises auf die Patenterteilung: **01.06.2005**
(21) Anmeldenummer: 03006686.4
(22) Anmeldetag: 26.03.2003
(51) Int. Cl.: B32B 15/08

(54) **Verpackungsverbundfolie**
Packing sheet
Feuille d'emballage

(43) Veröffentlichungstag der Anmeldung: 29.09.2004
(73) Patentinhaber: Hueck Folien GmbH & Co. KG, 92712 Pirk (DE)
(72) Erfinder: Bock, Dieter, 92637 Weiden (DE)
(74) Vertreter: Schneck, Herbert, Dipl.-Phys., Dr.

(56) Entgegenhaltungen:
- EP-A- 0 459 720
- WO-A-00/23287
- WO-A-94/29127
- WO-A-96/35969
- DE-A- 1 952 785
- DE-A- 4 042 442
- US-B1- 6 383 613

## Beschreibung

Die Erfindung richtet sich auf eine Verpackungsverbundfolie bestehend aus wenigstens zwei miteinander verbundenen Folien, insbesondere zur Verpackung von Süßwaren mit einem Dreheinschlag oder einem Falteinschlag. Auf diese Weise werden insbesondere Bonbons, Pralinen bzw. Schokoladekugeln oder auch andere Produkte verpackt, wobei die Folie um das Produkt mit einem Übermaß an beiden Seiten gelegt wird und die überstehenden Bereiche dann mittels Dreheinschlag zur Fixierung verdreht bzw. beim Falteinschlag eingefaltet und versiegelt werden.

Zur Erzielung einer besonders ansprechenden, eine gewisse Leichtigkeit suggerierenden Oberflächengestaltung ist es bekannt, solche Produkte von einem ersten Folienvorrat über eine erste Abrollung mit einer ersten inneren Umhüllung typischerweise in Form einer Aluminiumfolie zu versehen, und dann von einem zweiten Folienvorrat über eine zweite Abrollung eine zweite äußere Umhüllung in Form einer transparenten Kunststofffolie aufzubringen.

Diese bekannte Verpackungstechnik weist zahlreiche Nachteile auf. Insoweit ist zunächst zu erwähnen, dass die beiden Vorratsrollen für die Aluminiumfolie und für die Kunststofffolie zu unterschiedlichen Zeiten gewechselt werden müssen, sodass es zu sich addierenden Stillstandszeiten kommt. Wenn beim Auswechseln einer Rolle die andere Rolle bereits zu einem großen Teil abgearbeitet ist, wird diese häufig ebenfalls ausgewechselt, wobei man in Kauf nimmt, dass die auf der Rolle noch vorhandene Restmenge weggeworfen wird. Die Störanfälligkeit von zwei zeitlich und räumlich koordiniert verlaufenden Umhüllungsvorgängen ist relativ groß.

Es sind weiterhin zwei Druckarbeitsgänge für beide Folien und zwei Schneidvorgänge erforderlich.

Hiervon ausgehend liegt der Erfindung die Aufgabe zugrunde, den angestrebten Effekt einer hochwertig wirkenden, eine leichte Anmutung ausstrahlenden Verpackung kostengünstiger und funktionssicherer zu realisieren.

Diese Aufgabe wird erfindungsgemäß dadurch gelöst, dass die im Verbund obere, erste Folie (Deckfolie) transparent ist und mit der darunter liegenden zweiten Folie (Trägerfolie) nur teilweise, insbesondere in Form voneinander beabstandete Linien, durch Kaschierung verbunden ist.

Aufgrund des erfindungsgemäßen Folienverbundes wird nur noch eine Abspulung benötigt, sodass die Anschaffungskosten für eine zweite Abspulung entfallen bzw. eine schon vorhandene zweite Abspulung dazu verwendet werden kann, beim Erreichen des Endes einer Folienrollen mit der zweiten Abspulung sofort weiterverfahren zu können. Da nicht zwei Verpackungsvorgänge koordiniert werden müssen, ergeben sich weniger Störungen und wird eine höhere Abpackleistung erzielt. Die erfindungsgemäß vorgesehene Deckfolie sorgt nicht nur für das gewünschte optische Erscheinungsbild, welches gegenüber herkömmlichen Techniken unverändert beibehalten wird, sondern deckt auch den Druck auf der Trägerfolie zuverlässig ab und schützt diesen gegen Verkratzen. Gleichzeitig wird eine lebensmittelrechtlich unproblematische Verpackung geschaffen. Der optische Effekt bei herkömmlichen Verpackungen mit zwei getrennten Folien entsteht durch den unregelmäßigen Luftspalt zwischen den Folien. Dieser Effekt ist nach dem Wickeln um eine Kugel stark ausgeprägt, da die Folien sich nicht völlig glatt an das Füllgut anlegen. Erfindungsgemäß wird der gleiche Effekt durch den nur teilweisen linienförmigen oder punktförmigen Kaschierverbund zwischen Deckfolie und Trägerfolie erreicht.

In weiterer Ausgestaltung der Erfindung ist vorgesehen, dass die Kaschierung aus im Abstand voneinander verlaufenden Klebelinien besteht, welche senkrecht zur Längsrichtung Durchbrechungen bzw. Unterbrechungen aufweisen. Hierdurch ist es möglich, dass die zwischen Deckfolie und Trägerfolie eingeschlossene Luft beim Aufrollen der Folie seitlich nach außen entweichen kann, sodass vermieden wird, dass sich größere Luftpolster aufbauen, die zu einem Platzen der Folien oder zu einem Aufreißen der Kaschierung führen könnten.

Vorzugsweise ist vorgesehen, dass die zweite, untere Folie, also die Trägerfolie, mit einer Metallisierung, insbesondere in Form von Aluminium, versehen ist. Hierdurch wird der gleiche optische Effekt, wie bei der Verwendung einer Aluminiumfolie, bei deutlich niedrigeren Kosten erreicht. Die metallisierte Oberseite der Trägerfolie kann darüber hinaus auch noch bedruckt werden.

Vorteilhafterweise wird bei der Anwendung für Dreheinschläge auf der dem Füllgut zugewandten Seite wenigstens ein Streifen aus einer kaltsiegelnden Beschichtung aufgebracht, wodurch der Dreheinschlag stabilisiert wird. Dadurch ist die Verwendung kostengünstiger Kunststofffolien möglich.

Als Trägerfolie wird günstigerweise eine Polypropylenfolie von 12 bis 50 µm, vorzugsweise ca. 20 µm Dicke und als Deckfolie eine Polypropylenfolie von 10 bis 30 µm, vorzugsweise ca. 12 µm, Dicke verwendet.

Nachfolgend wird die Erfindung anhand eines bevorzugten Ausfihrungsbeispiels in Verbindung mit der Zeichnung näher erläutert. Dabei zeigen:
- Fig. 1: eine schematische Seitenansicht eines mit einer erfindungsgemäßen Verpackungsverbundfolie verpackten Schokoladenprodukts und
- Fig. 2: einen schematischen Schnitt durch eine erfindungsgemäße Verbundfolie.

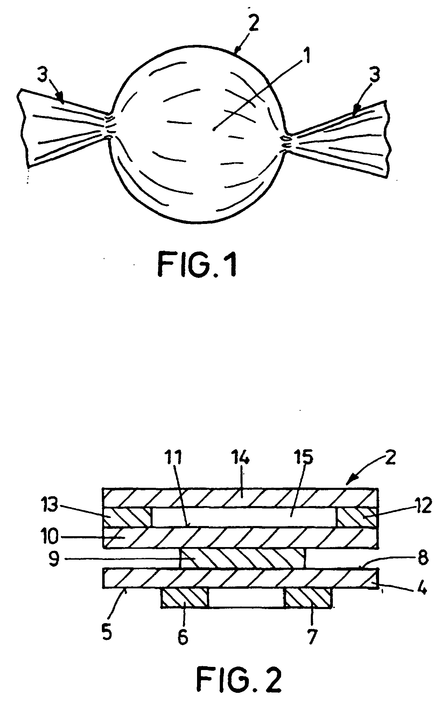

In Figur 1 ist eine Schokoladenkugel 1 dargestellt, welche mit einer Verbundfolie 2 umhüllt ist, die an beiden Seiten durch je einen sogenannten Dreheinschlag 3, d. h. durch Verdrehen der Folie 2, festgelegt ist.

Die Verbundfolie 2 umfasst eine erste Folie, eine Trägerfolie 4 aus einer gewöhnlichen Polypropylenfolie mit einer Dicke von 20 µm. Auf der Unterseite 5 dieser Trägerfolie 4 sind zwei Streifen 6, 7 einer Kaltsiegelbeschichtung bzw. eines druckempfindlichen Klebers aufgebracht, die Dreheinschläge trotz des Rückstellvermögens der Folie stabil halten.

Auf die gegenüberliegende Oberseite 8 der Trägerfolie 4 ist eine Aluminiumbeschichtung 9 aufgebracht, die ihrerseits mit einer schematisch dargestellten, im Tiefdruckverfahren aufgebrachten Bedruckung versehen ist. Auf die Oberseite 11 der Bedruckung 10 sind im Abstand voneinander zwei Streifen 12, 13 von Kaschierlack aufgebracht, über die eine Deckfolie 14 partiell über die Bedruckung 10 und ggf. die Metallisierung 9 mit der Trägerfolie 5 verbunden ist. Aufgrund dieser nur partiellen Verbindung entsteht zwischen der Deckfolie 14 und der Trägerfolie 5 ein gewisses Spiel, welches eine leichte Wellung der Deckfolie 14 ermöglicht. Das auftreffende Licht wird teilweise an der Deckfolie 14 reflektiert und teilweise durchdringt es die Deckfolie 14 und wird dann an der Aluminiumbeschichtung 9 der Trägerfolie 5 reflektiert. Da Deckfolie 14 und Trägerfolie 5 nicht flächig fest miteinander verbunden sind, und dementsprechend die Deckfolie 14 nicht planparallel zur Trägerfolie 5 verläuft, wird hierdurch der gewünschte optische Effekt erzielt.

In Längsrichtung der Kaschierlackstreifen 12, 13 sind diese immer wieder durch nicht beschichtete, quer zur Längsrichtung verlaufende Stege unterbrochen, die beim Aufrollen ein Entweichen der zwischen der Deckfolie 14 und der Trägerfolie 5 in dem Hohlraum 15 eingeschlossene Luft ermöglichen.

Im Ausführungsbeispiel besteht die Trägerfolie 5 aus einer 20 µm-dicken Polypropylenfolie und ist mit Aluminium metallisiert und die Deckfolie besteht aus einer 12 µm-dicken Folie ebenfalls aus Polypropylen.

## Patentansprüche

1. Verpackungsverbundfolie umfassend wenigstens zwei miteinander verbundene Folien, **dadurch gekennzeichnet, dass** die im Verbund obere, erste Folie (Deckfolie 14) transparent ist und mit der darunter liegenden zweiten Folie (Trägerfolie 5) nur teilweise, insbesondere in Form voneinander beabstandete Linien, durch Kaschierung verbunden ist.

2. Folie nach Anspruch 1, **dadurch gekennzeichnet, dass** die Kaschierung aus im Abstand voneinander verlaufenden Klebelinien (12, 13) besteht, welche senkrecht zur Längsrichtung Durchbrechungen bzw. Unterbrechungen aufweisen.

3. Folie nach Anspruch 1, **dadurch gekennzeichnet, dass** die untere, zweite Folie (5) nach ihrer der ersten, oberen Folie (14) zugewandten Seite wenigstens teilweise bedruckt ist.

4. Folie nach Anspruch 1, **dadurch gekennzeichnet, dass** die zweite, untere Folie (5) mit einer Metallisierung (9), insbesondere in Form von Aluminium, versehen ist.

5. Folie nach Anspruch 3, **dadurch gekennzeichnet, dass** die Bedruckung in Form von Tiefdruck auf die zweite Folie (5) und die Metallisierung (9) und/oder die erste Folie (14) aufgebracht ist.

6. Folie nach Anspruch 1, **dadurch gekennzeichnet, dass** auf die freie Außenseite der zweiten Folie (5) wenigstens ein Streifen (6, 7) aus einer kaltsiegelnden Beschichtung aufgebracht ist.

7. Folie nach Anspruch 1, **dadurch gekennzeichnet, dass** die zweite Folie (5) aus einer Polypropylenfolie von 12 bis 50 µm, vorzugsweise ca. 20 µm, Dicke besteht.

8. Folie nach Anspruch 1, **dadurch gekennzeichnet, dass** die erste Folie (14) aus einer Polypropylenfolie von 10 bis 30 µm, vorzugsweise ca. 12 µm, Dicke besteht.

## Claims

1. Composite sheet for packaging comprising at least two sheets connected to one another, **characterised in that** the first sheet (covering sheet 14), which is at the top of the composite, is transparent and is connected to the lower, second sheet (carrier sheet 5) only in part, in particular in the form of mutually spaced lines, by lamination.

2. Sheet according to claim 1, **characterised in that** the lamination consists of mutually spaced lines of adhesive (12, 13) that comprise gaps or breaks perpendicularly to the longitudinal direction.

3. Sheet according to claim 1, **characterised in that** at least part of the side of the lower, second sheet (5) that faces the first, upper sheet (14) is imprinted.

4. Sheet according to claim 1, **characterised in that** the second, lower sheet (5) is provided with a metal coating (9), in particular in the form of aluminium.

5. Sheet according to claim 3, **characterised in that** the imprint is applied in the form of an intaglio to the second sheet (5) and the metal coating (9) and/or the first sheet (14).

6. Sheet according to claim 1, **characterised in that** at least one strip (6, 7) of a cold-sealing coating is applied to the free outer side of the second sheet (5).

7. Sheet according to claim 1, **characterised in that** the second sheet (5) consists of a polypropylene sheet between 12 and 50 µm, preferably approximately. 20 µm, thick.

8. Sheet according to claim 1, **characterised in that** the first sheet (14) consists of a polypropylene sheet between 10 and 30 µm, preferably approximately. 12 µm, thick.

## Revendications

1. Feuille composite d'emballage constituée d'au moins deux feuilles reliées entre elles, **caractérisée en ce que** la première feuille supérieure (feuille de couverture 14) du composite est transparente, et n'est reliée que partiellement par contrecollage à la deuxième feuille (feuille de support 5) située en-dessous, notamment sous la forme de lignes espacées l'une de l'autre.

2. Feuille selon la revendication 1, **caractérisée en ce que** le contrecollage est constitué de lignes de collage (12, 13) espacées l'une de l'autre, qui comportent des découpes ou des interruptions perpendiculairement à la direction longitudinale.

3. Feuille selon la revendication 1, **caractérisée en ce que** la face supérieure de la deuxième feuille inférieure (5) orientée vers la feuille supérieure (14) est imprimée, au moins partiellement.

4. Feuille selon la revendication 1, **caractérisée en ce que** la deuxième feuille inférieure (5) est pourvue d'une métallisation (9), notamment sous forme d'aluminium.

5. Feuille selon la revendication 3, **caractérisée en ce que** l'impression sous forme d'héliogravure est apposée sur la deuxième feuille (5) et sur la métallisation (9) et/ou sur la première feuille (14).

6. Feuille selon la revendication 1, **caractérisée en ce qu'**au moins une bande (6, 7) d'un revêtement scellé à froid est appliquée sur la face extérieure libre de la deuxième feuille (5).

7. Feuille selon la revendication 1, **caractérisée en ce que** la deuxième feuille (5) est constituée d'une feuille de polypropylène d'une épaisseur de 12 à 50 µm, de préférence de l'ordre de 20 µm.

8. Feuille selon la revendication 1, **caractérisée en ce que** la première feuille (14) est constituée d'une feuille de polypropylène d'une épaisseur de 10 à 30 µm, de préférence de l'ordre de 12 µm.
